# FASCICULE DE BREVET EUROPEEN

(11) **EP 1 057 589 B1**
(45) Date de publication et mention de la délivrance du brevet: **22.10.2003**
(21) Numéro de dépôt: 00401399.1
(22) Date de dépôt: 19.05.2000
(51) Int. Cl.: B24B 13/005, B23Q 3/18, B23B 31/12

(54) **Dispositif de centrage et de positionnement d'une ébauche de verre de lunettes**
Vorrichtung zur Zentrierung und Positionierung eines Brillenglasrohlings
Device for centering and positioning a spectacle glass blank

(30) Priorité: 27.05.1999 FR 9906719
(43) Date de publication de la demande: 06.12.2000
(73) Titulaire: BRIOT INTERNATIONAL, 27340 Pont de l'Arche (FR)
(72) Inventeur: Videcoq, Jean-Jacques, 76570 Pavilly (FR); Sroka, Laurent, 76380 Valdelahaye (FR)
(74) Mandataire: Jacobson, Claude

(56) Documents cités:
- EP-A- 0 409 760
- FR-A- 2 672 834
- GB-A- 2 191 723
- US-A- 4 938 489

## Description

La présente invention est relative à un dispositif de centrage et de positionnement d'une ébauche de verre de lunettes en vue de la pose sur cette ébauche d'un adaptateur de meulage du type comprenant une table de support munie de moyen de maintien de l'ébauche. Elle s'applique notamment aux systèmes dans lesquels l'ébauche est soumise à un rayonnement capté par une caméra, par exemple tels que décrits dans le EP 0 409 760.

L'invention a pour but de fournir un dispositif qui permette de réaliser le centrage et le positionnement de l'ébauche par rapport à l'adaptateur en dégageant totalement le champ de vision de la caméra et sans contact glissant de la périphérie de l'ébauche avec une surface plane en verre, afin d'éviter tout risque de détérioration.

A cet effet, l'invention a pour objet un dispositif de centrage et de positionnement suivant la revendication 7.

Un exemple de réalisation de l'invention va maintenant être décrit en regard des dessins annexés sur lesquels :
- la Figure 1 est une vue schématique d'ensemble en perspective d'un dispositif de centrage et de positionnement conforme à l'invention ;
- la Figure 2 est une vue éclatée en perspective de la table de support de ce dispositif ;
- la Figure 3 est une vue correspondant à la Figure 2, après assemblage, dans une première position des organes ;
- la Figure 4 est une vue analogue en perspective de dessous, la couronne inférieure étant omise ; et
- la Figure 5 est une vue analogue à la Figure 3, après préhension d'une ébauche.

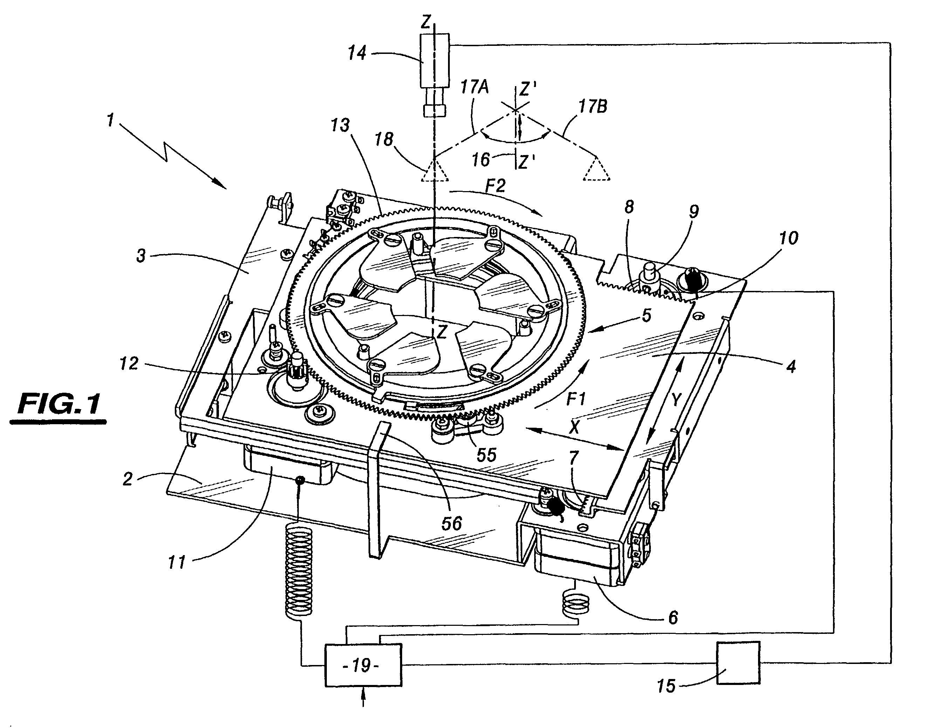

Le dispositif 1 de centrage et de positionnement d'ébauche de verre de lunettes représenté sur la Figure 1 comprend essentiellement un châssis fixe 2 qui porte un premier plateau 3 à déplacement linéaire suivant une direction X. Sur ce dernier est monté un deuxième plateau 4 à déplacement linéaire suivant une direction Y perpendiculaire à la direction X. Une table rotative 5 est à son tour montée sur le plateau 4.

Le châssis 2 porte un moteur 6 d'entraînement du plateau 3, dont le pignon de sortie engrène avec une crémaillère 7 de ce plateau. Le plateau 3 porte un moteur 8 d'entraînement du plateau 4, dont le pignon de sortie 9 engrène avec une crémaillère 10 de ce plateau. Le plateau 4 porte un moteur 11 d'entraînement en rotation de la table 5, dont le pignon de sortie 12 engrène avec une denture périphérique 13 de cette table.

Une caméra 14 est fixée suivant un axe de visée vertical de référence Z-Z qui traverse la région centrale de larges ouvertures des deux plateaux et de la table. La caméra est située au-dessus de la table 5, et une source de rayonnement lumineux non représentée est disposée suivant l'axe Z-Z au-dessous de cette table. La caméra est reliée à un analyseur d'images 15.

Une potence 16, d'axe vertical Z'-Z' décalé par rapport à l'axe Z-Z, porte un bras horizontal 17 à l'extrémité duquel peut être monté un adaptateur de meulage 18 destiné au montage de l'ébauche de verre dans une meuleuse. Le bras 17 peut prendre une position active 17A dans laquelle l'adaptateur a pour axe Z-Z. La potence 16 peut alors être abaissée pour poser l'adaptateur sur une ébauche de verre de lunettes, dans des conditions décrites plus loin. Pendant le fonctionnement de la caméra, le bras 17 est pivoté jusqu'à une position latéralement escamotée 17B.

Le dispositif 1 comprend également une unité de commande électronique 19 qui, à partir des informations reçues de l'analyseur 15, commande les moteurs 6, 9 et 11 de manière à centrer l'ébauche par rapport à l'axe Z-Z et éventuellement à l'orienter de la façon désirée autour de cet axe.

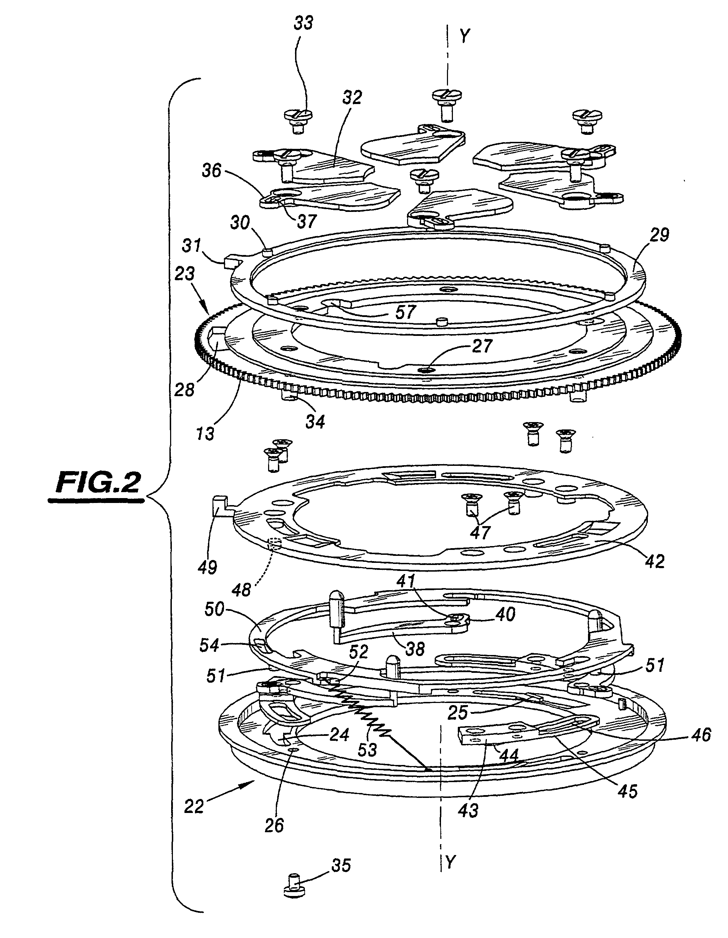

On décrira maintenant la structure de la table 5, en regard des Figures 2 à 5.

La table 5, qui présente de façon générale une symétrie ternaire par rapport à son propre axe vertical Y-Y, comprend un anneau principal 21 constitué d'une couronne inférieure 22 en forme de cuvette et d'une couronne supérieure 23 qui porte à sa périphérie la denture 13. Les deux couronnes ont sensiblement le même diamètre intérieur. Le fond de la couronne 22 est plat et comporte trois lumières arquées 24 munies chacune d'une rampe circonférentielle 25, ainsi que six trous d'assemblage 26. La couronne 23, de forme générale plane, comporte également six trous d'assemblage 27 et, en outre, près de la crémaillère 13, une lumière arquée 28.

Sur la face supérieure de la couronne 23 est centrée une bague d'actionnement 29 munie de six picots 30 en saillie vers le haut ainsi que d'un ergot radial extérieur 31. Cette bague actionne six secteurs de support 32 plans et horizontaux articulés sur la couronne 23 au moyen de vis d'assemblage respectives 33. Chaque vis traverse une paire de trous 26, 27 ainsi qu'une entretoise 34, puis se visse dans un écrou 35 (une seule entretoise et un seul écrou ont été représentés). Chaque secteur 32 comporte un appendice extérieur 36 pourvu d'une rainure oblongue 37 dans laquelle est reçu un picot 30.

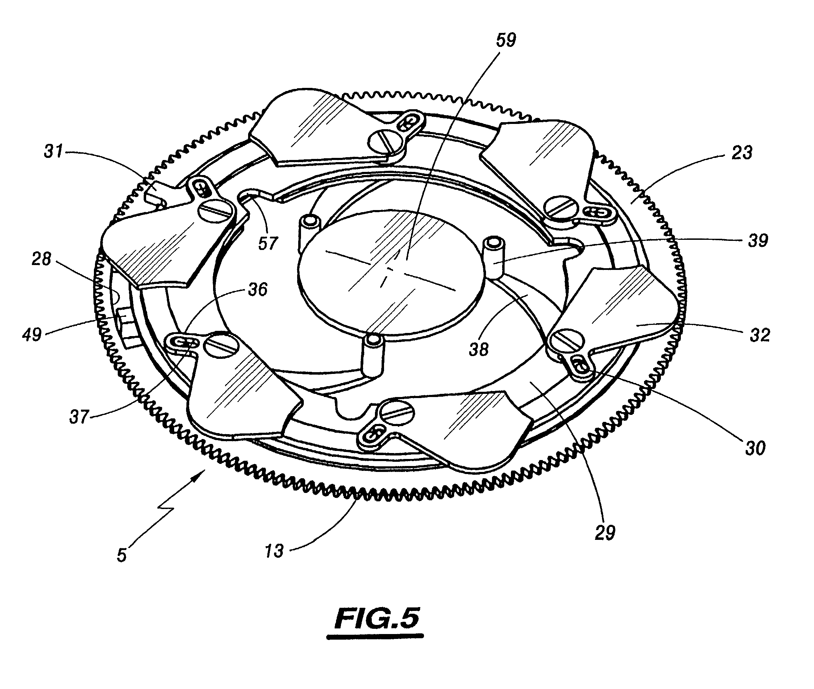

Ainsi, en agissant sur l'ergot 31, on peut faire tourner la bague 29 par rapport à la couronne 23, et les picots 30 provoquent alors l'oscillation simultanée des six secteurs 32 autour des axes des six vis 33, à la manière des lamelles d'un diaphragme d'objectif photographique. Les secteurs peuvent ainsi prendre soit une position active rapprochée de l'axe Y-Y (Figures 1, 3 et 4), soit une position escamotée (Figure 5) dans laquelle ils dégagent totalement l'ouverture centrale des deux couronnes 22 et 23.

Entre les deux couronnes 22 et 23 sont par ailleurs articulés, autour de trois entretoises 34, trois bras de préhension horizontaux 38 ayant chacun à son extrémité libre un doigt cylindrique en caoutchouc 39 à axe vertical. Chaque bras 38 présente un appendice 40 à lumière oblongue 41 à l'opposé du doigt 39 par rapport à l'entretoise 34. L'ensemble des trois bras est commandé par deux équipages rotatifs qui vont maintenant être décrits.

Le premier équipage est une bague 42 sous laquelle sont fixées trois pièces arquées 43. Chacune de ces pièces comporte une partie de fixation épaisse pourvue d'une came inférieure 44, et une partie de guidage mince 45 munie d'une lumière arquée 46 traversée librement par une entretoise 34. Chaque pièce 43 est fixée à la bague 42 au moyen de deux vis 47.

De plus, la face inférieure de la bague 42 porte un téton 48, tandis qu'un pion en L 49 fait saillie sur la périphérie de cette bague.

Le second équipage rotatif précité est une bague 50 formant satellite, disposée en sandwich entre la bague 42 et le fond de la couronne 22. Ce satellite présente un certain nombre de dégagements destinés à éviter toute interférence avec les autres pièces mobiles. Sur la face inférieure du satellite sont prévus d'une part trois tétons 51 reçus chacun dans une lumière oblongue 41 d'un bras 38, et d'autre part trois saillies d'accrochage 52. Un ressort hélicoïdal sensiblement circonférentiel 53 est tendu entre chaque saillie 52 et un point de la couronne fixe 22, de sorte que le satellite est en permanence sollicité en rotation dans le sens anti-horaire (un seul ressort est représenté sur la Figure 2). Le satellite présente encore une lumière arquée 54 qui reçoit le téton 48.

A l'état assemblé, chaque bras 38 est guidé dans un plan horizontal entre la partie 45 d'une pièce 43 et la face inférieure du satellite 50. Au repos, sous l'effet des ressorts 53, ce satellite est sollicité dans le sens anti-horaire. Ceci fait pivoter les bras 38 vers une position active dans laquelle les doigts de préhension 39 circonscrivent un cercle de diamètre inférieur à celui des plus petites ébauches à saisir. Ce mouvement de pivotement est limité par la venue du pion 48 en butée à l'extrémité gauche de la lumière 54.

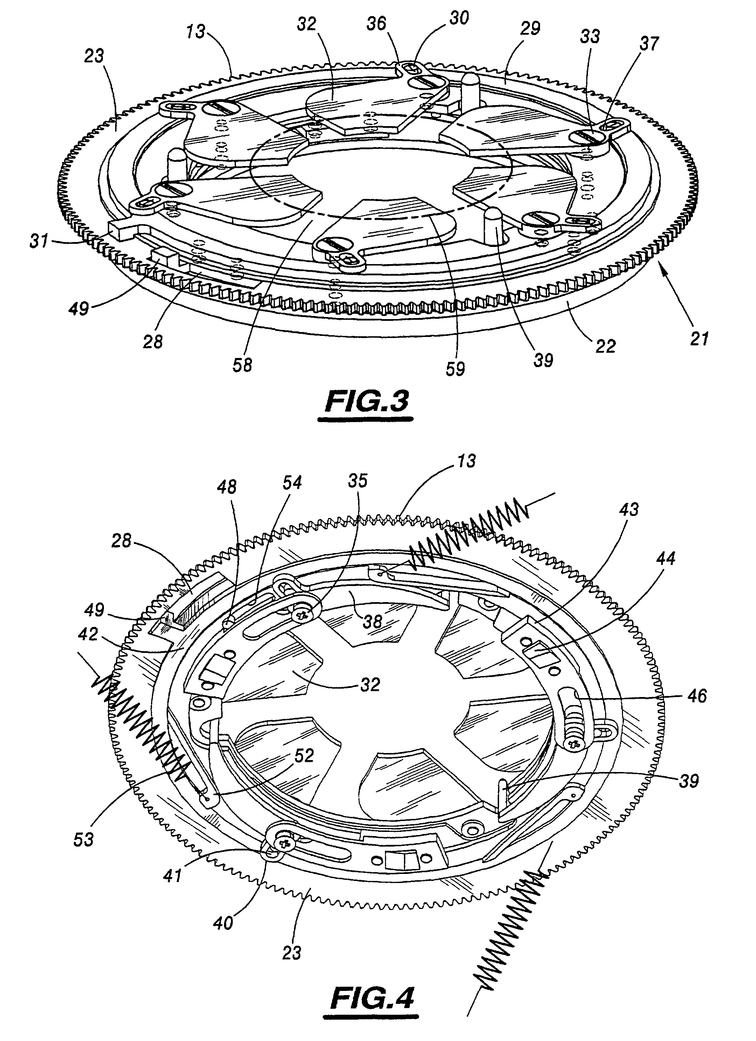

Par ailleurs (Figure 3), le pion 49 fait saillie vers le haut à travers la lumière 28 de la couronne supérieure 23, et l'ergot 31 se trouve à une petite distance circonférentielle de cette lumière.

En se référant à la Figure 1, on voit que l'anneau 21 est centré sur le plateau 4 au moyen de galets 55 à axes verticaux ; il est de plus porté par d'autres galets à axes horizontaux, qui roulent sur sa plage périphérique inférieure. De plus, le châssis 2 porte un doigt en C dont la branche supérieure 56 se trouve légèrement au-dessus du plateau 4 et est dirigée vers l'axe Z-Z.

Le fonctionnement est le suivant.

La table 5 étant dans sa position de repos décrite plus haut, et les secteurs 32 étant en position active, les moteurs 6, 9 et 11 sont alimentés de façon à amener le doigt 56 à côté et à droite du pion 49. La table 5 est alors tournée dans le sens anti-horaire F1 de la Figure 1, ce qui provoque, via le pion 48, la rotation relative du satellite 50 à l'encontre des ressorts 53. La coopération des pions 51 et des lumières 41 fait alors pivoter les bras 38 jusqu'à leur position totalement escamotée, dans laquelle les doigts 39 butent contre la périphérie intérieure du satellite et se logent dans des évidements 57 prévus dans la périphérie intérieure de la couronne 23.

Pendant ce pivotement, les doigts passent librement dans les intervalles 58 qui séparent les secteurs 32.

La table 5 se trouve alors dans sa configuration de la Figure 3, avec les secteurs 32 rapprochés et les doigts 39 écartés. On pose alors une ébauche circulaire 59 de verre de lunettes sur les parties intérieures de l'ensemble des secteurs, de façon à peu près centrée, comme illustré en trait mixte sur la Figure 3.

On fait ensuite tourner la table 5 dans le sens horaire F2, de sorte que le pion 49 se déplace vers la droite dans la lumière 28.

Pendant une première fraction de ce déplacement relatif, les ressorts 53 font tourner le satellite 50, dont les pions 51 font pivoter les trois bras 38 vers l'intérieur.

Lorsque les trois doigts 39 sont au contact de la périphérie de l'ébauche, le satellite 50 s'immobilise, et il se produit une certaine course morte du pion 48 dans la lumière 54. A la fin de cette course morte, les cames 44 arrivent au contact des rampes 25 de la couronne 22.

La fin du mouvement du pion 49 dans la lumière 28 oblige les cames 44 à monter sur les rampes 25, ce qui provoque un léger soulèvement, de l'ordre du mm, de l'équipage 42-43-50, et donc également des trois bras 38. Ainsi, l'ébauche 59, maintenant saisie par les trois doigts 39, est légèrement soulevée par rapport aux secteurs 32.

Par des déplacements appropriés de la table 5, le doigt fixe 56 est ensuite amené à côté et à droite de l'ergot 31, puis la table 5 est entraînée de nouveau en rotation dans le sens F1. Ceci actionne la bague 29 et provoque l'ouverture simultanée des six secteurs 32.

La situation est alors celle de la Figure 5 : l'ébauche est tenue par trois points de sa périphérie, avec une force radiale déterminée par les ressorts 53, par les seuls doigts 39, et les secteurs 32 dégagent totalement l'ouverture centrale de la table 5.

Cette situation étant stable, la table 5 peut être dégagée du doigt 56 et être ramenée en position centrée sur l'axe Z-Z. La caméra 14 dispose alors d'un champ de vision total de l'ébauche et transmet l'image à l'analyseur 15. En fonction des signaux reçus de ce dernier et d'autres informations, relatives à la monture de lunettes, entrées par ailleurs et symbolisées par une flèche sur la Figure 1, l'unité 19 commande les déplacements en X et Y, et éventuellement en rotation, de la table 5, pour centrer et positionner correctement l'ébauche par rapport à l'axe Z-Z. L'adaptateur 18, qui était jusque là en position escamotée, est enfin amené suivant l'axe Z-Z, puis descendu suivant cet axe et posé sur l'ébauche.

## Revendications

1. Dispositif de centrage et de positionnement d'une ébauche de verre de lunettes en vue de la pose sur cette ébauche d'un adaptateur de meulage, du type comprenant une table de support (5) munie de moyens (32, 38, 39) de maintien de l'ébauche (59), **caractérisé en ce que** les moyens de maintien comprennent des organes de support escamotables (32) sur lesquels l'ébauche peut être posée, et des organes (38, 39) de préhension de la périphérie de l'ébauche, escamotables indépendamment des organes de support.

2. Dispositif suivant la revendication 1, **caractérisé en ce que** les organes de préhension (38, 39) sont adaptés pour soulever l'ébauche (59) après être venus en prise avec la périphérie de celle-ci.

3. Dispositif suivant la revendication 1 ou 2, **caractérisé en ce que** les organes de préhension (38, 39) sont sollicités élastiquement vers une position de serrage radial d'une ébauche de diamètre minimal, et **en ce que** le dispositif comprend des moyens (42, 50) d'ouverture simultanée de l'ensemble des organes de préhension à l'encontre de cette sollicitation et de libération simultanée de l'ensemble de ces organes de préhension, la liaison entre les moyens d'ouverture et de libération (42, 50) et les organes de préhension (38, 39) comportant une course morte (48, 54).

4. Dispositif suivant la revendication 3, **caractérisé en ce que** des moyens d'ouverture et de libération (42, 50) comprennent une première bague (50) munie de reliefs (51) d'actionnement des organes de préhension (38, 39), cette première bague étant sollicitée élastiquement en rotation, et une seconde bague (42) munie d'un relief (49) de manoeuvre et reliée à la première bague (50) par ladite liaison comportant une course morte (48, 54).

5. Dispositif suivant l'une quelconque des revendications 1 à 4, **caractérisé en ce que** les organes de support (32) forment des secteurs qui, en position active, délimitent entre eux des intervalles (58) permettant les déplacements des organes de préhension (38, 39) entre leurs positions active et escamotée.

6. Dispositif suivant la revendication 5, **caractérisé en ce qu'**il comprend une bague d'actionnement (29) munie d'un relief d'actionnement (31) et destinée à réaliser l'ouverture et la fermeture simultanées de l'ensemble des secteurs (32).

7. Dispositif suivant les revendications 4 et 6 prises ensemble, **caractérisé en ce qu'**il comprend un organe unique (56) de commande sélective des moyens (42, 50) d'ouverture et de libération ou de la bague d'actionnement (29).

8. Dispositif suivant la revendication 7, **caractérisé en ce que** la table de support (5) est équipée de moyens (6, 9, 11) de déplacement suivant deux axes perpendiculaires et d'entraînement en rotation.

9. Dispositif suivant la revendication 8, **caractérisé en ce que** l'organe de commande (56) est fixe et **en ce que** lesdits reliefs (31, 49) sont adaptés pour venir en prise avec cet organe de commande par des déplacements en translation et en rotation de la table de support (5).

10. Dispositif suivant l'une quelconque des revendications 1 à 9, **caractérisé en ce qu'**il comprend des moyens (14) d'émission/réception d'un rayonnement d'analyse de l'ébauche, des moyens (15) d'acquisition des caractéristiques de l'ébauche par analyse des signaux délivrés par les moyens d'émission/réception, et des moyens (19) de commande des déplacements de la table de support (5) en fonction des caractéristiques de l'ébauche ainsi déterminées et d'autres informations.

11. Dispositif suivant l'une quelconque des revendications 1 à 10, **caractérisé en ce qu'**il comprend un dispositif (16, 17) d'amenée d'un adaptateur de meulage (18) suivant un axe vertical prédéterminé (Z-Z) et de descente de cet adaptateur jusqu'au contact de l'ébauche (59) maintenue par les organes de préhension (38, 39).

## Patentansprüche

1. Vorrichtung zum Zentrieren und Positionieren eines Brillenglasrohlings zum Zweck der Auflage eines Schleifadapters auf diesen Rohling, umfassend einen Tragtisch (5), der mit Mitteln (32, 38, 39) zum Halten des Rohlings (59) versehen ist, **dadurch gekennzeichnet, daß** die Haltemittel wegrückbare Tragorgane (32), auf die der Rohling aufgelegt werden kann, und unabhängig von den Tragorganen wegrückbare Organe (38, 39) zum Ergreifen des Umfangs des Rohlings umfassen.

2. Vorrichtung nach Anspruch 1, **dadurch gekennzeichnet, daß** die Greiforgane (38, 39) dafür ausgelegt sind, den Rohling (59) nach In-Eingriff-Kommen mit dessen Umfang anzuheben.

3. Vorrichtung nach Anspruch 1 oder 2, **dadurch gekennzeichnet, daß** die Greiforgane (38, 39) elastisch auf eine Stellung der radialen Einklemmung eines Rohlings mit einem Minimumdurchmesser zu beaufschlagt sind und daß die Vorrichtung Mittel (42, 50) zur gleichzeitigen Öffnung aller Greiforgane entgegen dieser Beaufschlagung und zur gleichzeitigen Freigabe aller dieser Greiforgane aufweist, wobei die Verbindung zwischen diesen Öffnungs- und Freigabemitteln (42, 50) und den Greiforganen (38, 39) einen toten Weg (48, 54) aufweist.

4. Vorrichtung nach Anspruch 3, **dadurch gekennzeichnet, daß** die Öffnungs- und Freigabemittel (42, 50) einen ersten Ring (50), der mit Vorsprüngen (51) zur Betätigung der Greiforgane (38, 39) versehen ist und elastisch in Drehung beaufschlagt wird, und einen zweiten Ring (42) aufweisen, der mit einem Betätigungsvorsprung (49) versehen ist und durch diese einen toten Weg (48, 54) aufweisende Verbindung mit dem ersten Ring (50) verbunden ist.

5. Vorrichtung nach einem der Ansprüche 1 bis 4, **dadurch gekennzeichnet, daß** die Tragorgane (32) Sektoren bilden, die in aktiver Stellung zwischen sich Zwischenräume (58) begrenzen, die die Bewegungen der Greiforgane (38, 39) zwischen ihrer aktiven und ihrer weggerückten Stellung gestatten.

6. Vorrichtung nach Anspruch 5, **dadurch gekennzeichnet, daß** sie einen Betätigungsring (29) aufweist, der mit einem Betätigungsvorsprung (31) versehen ist und dazu bestimmt ist, die gleichzeitige Öffnung und Schließung aller Sektoren (32) vorzunehmen.

7. Vorrichtung nach den Ansprüchen 4 und 6 zusammen, **dadurch gekennzeichnet, daß** sie ein einziges Organ (56) zur selektiven Steuerung der Öffnungs- und Freigabemittel (42, 50) oder des Betätigungsrings (29) aufweist.

8. Vorrichtung nach Anspruch 7, **dadurch gekennzeichnet, daß** der Tragtisch (5) mit Mitteln (6, 9, 11) zur Bewegung in zwei zueinander senkrechten Achsen und zum Drehantrieb versehen ist.

9. Vorrichtung nach Anspruch 8, **dadurch gekennzeichnet, daß** das Steuerorgan (56) feststehend ist und daß die Vorsprünge (31, 49) dafür ausgelegt sind, mit diesem Steuerorgan durch Translations- und Drehbewegungen des Tragtisches (5) in Eingriff zu kommen.

10. Vorrichtung nach einem der Ansprüche 1 bis 9, **dadurch gekennzeichnet, daß** sie Mittel (14) zum Senden/Empfangen einer Strahlung zur Analyse des Rohlings, Mittel (15) zur Erfassung der Merkmale des Rohlings durch Analyse der von den Sende-/Empfangs-Mitteln gelieferten Signale und Mittel (19) zur Steuerung der Bewegungen des Tragtisches (5) in Abhängigkeit von den auf diese Weise bestimmten Merkmalen des Rohlings und von anderen Informationen umfaßt.

11. Vorrichtung nach einem der Ansprüche 1 bis 10, **dadurch gekennzeichnet, daß** sie eine Vorrichtung (16, 17) zur Zuführung eines Schleifadapters (18) in einer vorbestimmten vertikalen Achse (Z-Z) und zur Abwärtsbewegung dieses Adapters bis in den Kontakt mit dem durch die Greiforgane (38, 39) gehaltenen Rohlings (59) aufweist.

## Claims

1. Device for centring and positioning a spectacle glass blank for the purpose of placing a grinding adapter on this blank, of the type comprising a support table (5) provided with means (32, 38, 39) for retaining the blank (59), **characterised in that** the retaining means comprise retractable support elements (32) on which the blank can be placed, and elements (38, 39) for gripping the periphery of the blank which are retractable independently of the support elements.

2. Device as claimed in Claim 1, **characterised in that** the gripping elements (38, 39) are adapted to raise the blank (59) after having come into engagement with the periphery thereof.

3. Device as claimed in Claim 1 or 2, **characterised in that** the gripping elements (38, 39) are spring-loaded towards a radial clamping position of a blank of minimal diameter, and that the device comprises means (42, 50) for simultaneous opening of all of the gripping elements against this loading and for simultaneous release of all of these gripping elements, the connection between the opening and release means (42, 50) and the gripping elements (38, 39) having a free travel (48, 54).

4. Device as claimed in Claim 3, **characterised in that** the opening and release means (42, 50) comprise a first ring (50) provided with projections (51) for actuating the gripping elements (38, 39), this first ring being spring-loaded in rotation, and a second ring (42) provided with a manoeuvring projection (49) and connected to the first ring (50) by the said connection having a free travel (48, 54).

5. Device as claimed in any one of Claims 1 to 4, **characterised in that** the support elements (32) form sectors which, in the active position, delimit between them gaps (58) which permit the displacement of the gripping elements (38, 39) between their active and retracted positions.

6. Device as claimed in Claim 5, **characterised in that** it comprises an actuating ring (29) provided with an actuating projection (31) and intended to effect the simultaneous opening and closing of all of the sectors (32).

7. Device as claimed in Claims 4 and 6 taken together, **characterised in that** it includes a single element (56) for selective control of the opening and release means (42, 50) or of the actuating ring (29).

8. Device as claimed in Claim 7, **characterised in that** the support table (5) is equipped with means (6, 9, 11) for displacement along two perpendicular axes and for driving in rotation.

9. Device as claimed in Claim 8, **characterised in that** the control element (56) is fixed and that the said projections (31, 49) are adapted to come into engagement with this control element by displacements in translation and in rotation of the support table (5).

10. Device as claimed in any one of Claims 1 to 9, **characterised in that** it comprises means (14) for emission/reception of radiation for analysis of the blank, means (15) for acquisition of the characteristics of the blank by analysis of the signals supplied by the emission/reception means, and means (19) for controlling the displacements of the support table (5) as a function of the characteristics of the blank thus determined and of other information.

11. Device as claimed in any one of Claims 1 to 10, **characterised in that** it comprises a device (16, 17) for bringing a grinding adapter (18) along a predetermined vertical axis (Z-Z) and for lowering this adapter until it contacts the blank (59) retained by the gripping elements (38, 39).
